# EUROPEAN PATENT APPLICATION

(11) **EP 3 855 327 A1**
(43) Date of publication of application: **28.07.2021**
(21) Application number: 21153355.9
(22) Date of filing: 25.01.2021
(51) Int. Cl.: G06F 21/32, H04L 29/06

(54) **DATA CONTROL USING DIGITAL FINGERPRINTS**

(30) Priority: 24.01.2020 US 202016752593
(71) Applicant: Alitheon, Inc., Bellevue, WA 98004 (US); Ross, David Justin, Bellevue, WA 98004 (US); Shannon, Will Charles, Bellevue, WA 98004 (US); Qian, Cheng, Bellevue, WA 98004 (US); Ross, Robert Saxon, Bellevue, WA 98004 (US)
(72) Inventor: Ross, David Justin, Bellevue, WA Washington 98004 (US); Shannon, Will Charles, Bellevue, WA Washington 98004 (US); Qian, Cheng, Bellevue, WA Washington 98004 (US); Ross, Robert Saxon, Bellevue, WA Washington 98004 (US)
(74) Representative: Dendorfer, Claus

(57) **Abstract**

A method, system and software for control of data, particularly although not exclusively personal data, through the use of digital fingerprints enables a person to "opt in" to a system containing data about him and secure that data by a biologically-based digital fingerprint (such as of his hand or face). In another case, a user may be automatically (involuntarily) inducted into a system. Either way, the present disclosure enables a user to opt out of the system, again using his digital fingerprint. Upon execution of an opt out process, his digital fingerprint is removed from the system, along with any data solely pertaining to that user.

## Description

### Copyright Notice

© Alitheon, Inc. 2019-2020. A portion of the disclosure of this patent document contains material which is subject to copyright protection. The copyright owner has no objection to the facsimile reproduction by anyone of the patent document or the patent disclosure, as it appears in the Patent and Trademark Office patent file or records, if and when they are made public, but otherwise reserves all copyright rights whatsoever. 37 CFR § 1.71(d).

### FIELD

This application pertains to methods, systems, and software for control of data, particularly although not exclusively personal data, through the use of digital fingerprints. It enables a user-by presenting their digital fingerprint-to change data access requirements and permissions, or to completely opt out of a system containing data pertaining to the user.

### BACKGROUND

Privacy, in the sense of maintaining control over one's personal data, has become a matter of urgent concern as data collection and storage proliferates. The need remains for more secure, flexible, and widely applicable methods for protecting access to, and controlling the uses of, a variety of digital assets - including files and programs, especially those that contain personal data. The need remains to give a user exclusive, secure control over their information, without collecting and storing conventional biometric data or other personally identifiable information (PII) which, if leaked, would only exacerbate existing privacy issues.

### BRIEF DESCRIPTION OF THE DRAWINGS

To enable the reader to realize one or more of the above-recited and other advantages and features of the present disclosure, a more particular description follows by reference to specific embodiments thereof which are illustrated in the appended drawings. Understanding that these drawings depict only typical embodiments of the disclosure and are not therefore to be considered limiting of its scope, the present disclosure will be described and explained with additional specificity and detail through the use of the accompanying drawings in which:
FIG. 1A is a simplified block diagram of one example of a secure digital fingerprint-based data control system in accordance with the present disclosure.
FIG. 1B is a simplified block diagram of another example of a secure digital fingerprint-based data control system arranged to control access to airline frequent flyer program data.
FIG. 2 is a conceptual illustration of a database in one example embodiment of the present disclosure in which digital fingerprints control access to data elements.
FIG. 3 is a simplified flow diagram of an example process for accessing a data element secured by a digital fingerprint of a user.
FIG. 4 is a simplified flow diagram of a process for leveraging objects instead of biometric identification to avoid collecting personally identifiable information of a person.
FIG. 5 is a simplified flow diagram of an example process for implementing a do not induct list associated with a digital fingerprint-based data control system.
FIG. 6 is a conceptual diagram illustrating some examples of control over database contents using digital fingerprints.

### DETAILED DESCRIPTION OF ONE OR MORE EMBODIMENTS

The following is a summary of the present disclosure to provide a basic understanding of some features and context. This summary is not intended to identify key or critical elements of the disclosure or to delineate the scope of the disclosure. Its sole purpose is to present some concepts of the present disclosure in simplified form as a prelude to a more detailed description that is presented later.

A system taught by this disclosure generally comprises a combination of digital fingerprint authentication techniques, processes, programs, and hardware to enable a user, exclusively, to create database entries, modify content (data or access methods and permissions) and eliminate some or all of the data through the use of their own biologically-based digital fingerprint.

In some cases, a user may be automatically (involuntarily) inducted into a system. For example, an image of the user may be captured, perhaps without their knowledge. The present disclosure enables a user to opt out of the system, again using his digital fingerprint. Upon execution of an opt out process, his digital fingerprint is removed from the system, along with any data solely pertaining to that user. In some cases, two (or more) users may have access to the same data element or program. One user may elect to opt out of that system, and their digital fingerprint will be removed, but the data element is removed only after all users who have access to it have opted out of the system.

In one example, a method according to this disclosure comprises the steps of: inducting a first user into a data control system ("DCS"), wherein inducting the user includes acquiring a first biologically based digital fingerprint of the user and storing the first digital fingerprint in a database coupled to the DCS; storing a data element in the database and linking the data element to the first digital fingerprint in the database; receiving a target digital fingerprint presented to the DCS; querying the database to identify a matching digital fingerprint based on the target digital fingerprint; in a case that a match is found by the querying step, determining whether presentation of the target digital fingerprint alone is sufficient to grant access to the database; in a case that presentation of the target digital fingerprint alone is sufficient to grant access to the database, determining a scope of access rights granted by the presentation of the target digital fingerprint; receiving a command input to the DCS; comparing the command to the scope of access rights; and executing the command only if the executing the command is within the determined scope of access rights.

This novel disclosure gives a user secure control over creating entries, modifying content (of the data or of the access methods) and elimination. "Elimination" here refers to opting out of a program or process. As one example, a person previously inducted into an airline loyalty program using a biologically based digital fingerprint of the user will have exclusive control, and the ability to exit the program and delete their data by presenting a biologically based digital fingerprint that matches the one previously used for induction. "Matching" in this regard generally refers to matching within a selected threshold difference metric value.

In another aspect of the disclosure, a method comprises the steps of: acquiring image data of a person; processing the image data to extract a digital fingerprint wherein the digital fingerprint includes fingerprint features extracted from selected authentication regions in the image data; querying a do-not-induct ("DNI") database for a match based on the digital fingerprint; in a case that a match is found in the DNI database, rejecting the digital fingerprint from induction into a system, and deleting all copies of the digital fingerprint.

Reference will now be made in detail to embodiments of the inventive concept, examples of which are illustrated in the accompanying drawings. The accompanying drawings are not necessarily drawn to scale. In the following detailed description, numerous specific details are set forth to enable a thorough understanding of the inventive concept. It should be understood, however, that persons having ordinary skill in the art may practice the inventive concept without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first machine could be termed a second machine, and, similarly, a second machine could be termed a first machine, without departing from the scope of the inventive concept.

It will be further understood that when an element or layer is referred to as being "on," "coupled to," or "connected to" another element or layer, it can be directly on, directly coupled to or directly connected to the other element or layer, or intervening elements or layers may be present. In contrast, when an element is referred to as being "directly on," "directly coupled to," or "directly connected to" another element or layer, there are no intervening elements or layers present. Like numbers refer to like elements throughout. As used herein, the term "and/or" includes any and all combinations of one or more of the associated listed items.

The terminology used in the description of the inventive concept herein is for the purposes of describing illustrative embodiments only and is not intended to be limiting of the inventive concept. As used in the description of the inventive concept and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed objects. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

**Nomenclature.** Some of the terms used herein have the following meanings or illustrative species. *Digital fingerprinting* and *scanning* (or imaging) are described in detail later.

**Scanner** or **Imager.** A device (typically with embedded software) that can sense and capture either electromagnetic radiation or a mechanical wave that has traveled through a physical object or reflected off a physical object or any other means to capture surface or internal structure of an object. Common examples may include a camera, CCD array, x-ray machine, etc. See definition for "scanning" herein for further details.

**Database.** In a general use of the teachings of this disclosure there exists a database containing various data elements that the user has access to and control of. More specifically, they user has various permissions relative to the data, which might include adding new data elements, removing existing data elements, reading or modifying data elements, changing their relationship etc. The "database" may also be a file of some other kind, a program, or another digital asset accessible through a digital fingerprint. That is, a digital fingerprint must be used to gain access to the controlled data elements.

**Access.** The database is accessed by presenting to the system one or more digital fingerprints that have previously been associated with the database for the purpose of providing access. There may be multiple digital fingerprints associated with one file or program (and one digital fingerprint may be associated with multiple files). If there are multiple digital fingerprints, they may all be needed for access, any one of them may grant access, or any combination of such situations may obtain. Different digital fingerprints may have different permissions with respect to the database.

**Opting Out.** In one example, a person has been inducted into a system whose use is voluntary (i.e. it is an opt-in system). "Induction" in this context includes generating a digital fingerprint of the person and storing it in a database, as described in detail below. Later, the person wishes to opt out of the system. The system is accessed by his digital fingerprint, say of his hand (whatever was used for the initial induction). He presents his hand to the imager, its digital fingerprint is extracted and compared to those in the system (database). If a match is found, it grants access, and he is given the option of removing his information from the system. (*Matching* a digital fingerprint within a threshold difference metric value is described below.) If he chooses to do so, his participation in the system is ended. There are many ways to end this participation. It may be as simple as removing that digital fingerprint from the access list (for accessing files which others can also access) or as complete as removing any data file (including whatever permissions he has been granted by the system) accessible through that digital fingerprint. He can then present his hand again and this time it will say "not authenticated" or a message to that effect. He has now opted out of the system.

Prior art means of access to the file, for example, passwords, dongle, 2FA, could be used to enable a person to opt out. Utilization of digital fingerprints represents a novel improvement over prior art because in many cases such digital fingerprints are much more secure than something like a password or a drivers' license that can be lost or stolen. This disclosure teaches application of a biologically based digital fingerprint of the user as a secure means of removing or altering contents of a file or actions of a program. In some cases, a proxy object may be digital fingerprinted and used for the same purpose, but the proxy must be inducted into the system by an authorized person who is first authenticated by their biologically based digital fingerprint.

**Facial recognition.** There are known methods of facial recognition that are different from the below disclosed techniques. While it is true that a person's face may be imaged and processes to form a digital fingerprint, this disclosed process is quite different from known facial recognition techniques. Digital fingerprinting as that term is used herein is explained in detail later.

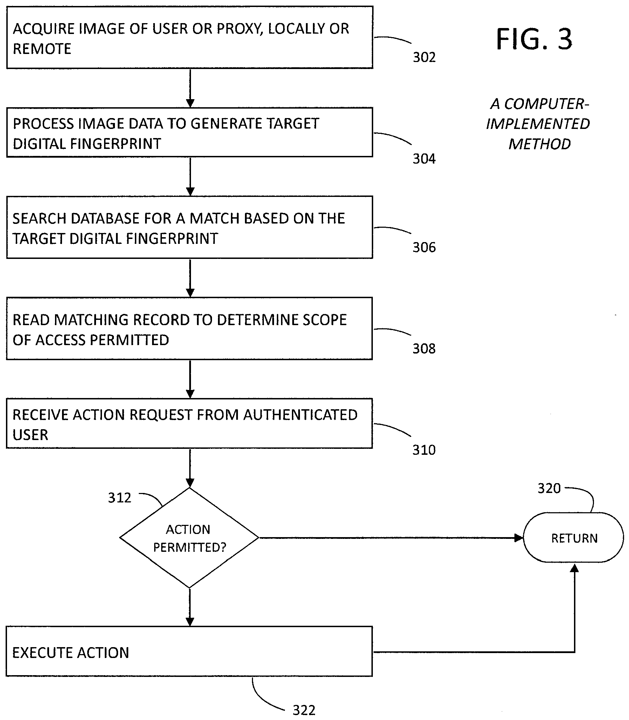

**Permissions.** For the purposes of this disclosure, a possessor of a digital fingerprint (or the appropriate multiple digital fingerprints) presents these digital fingerprint(s) to the system and the permissions associated with that fingerprint (or combination of fingerprints) are read by the system from the associated data. Those permissions may allow the user to read some elements, create and populate new elements, modify the contents, delete, and otherwise work with those elements, remove access by their digital fingerprint(s), and so on. We refer to these as "requested actions" with regard to FIG. 3. For example, a person may be able to modify the beneficiary of his corporate insurance, view but not modify his salary, and so on.

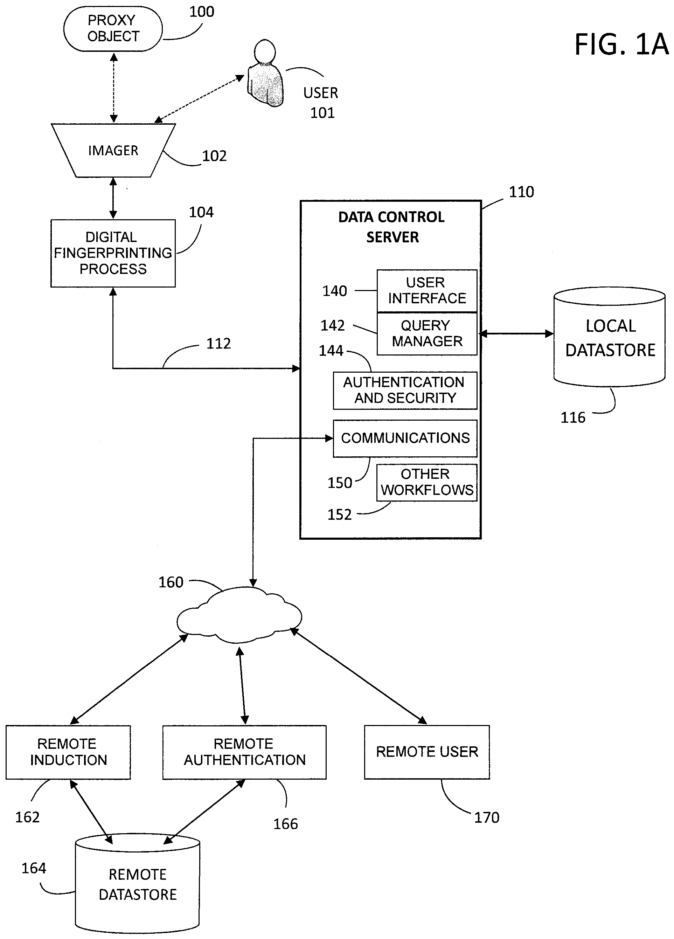

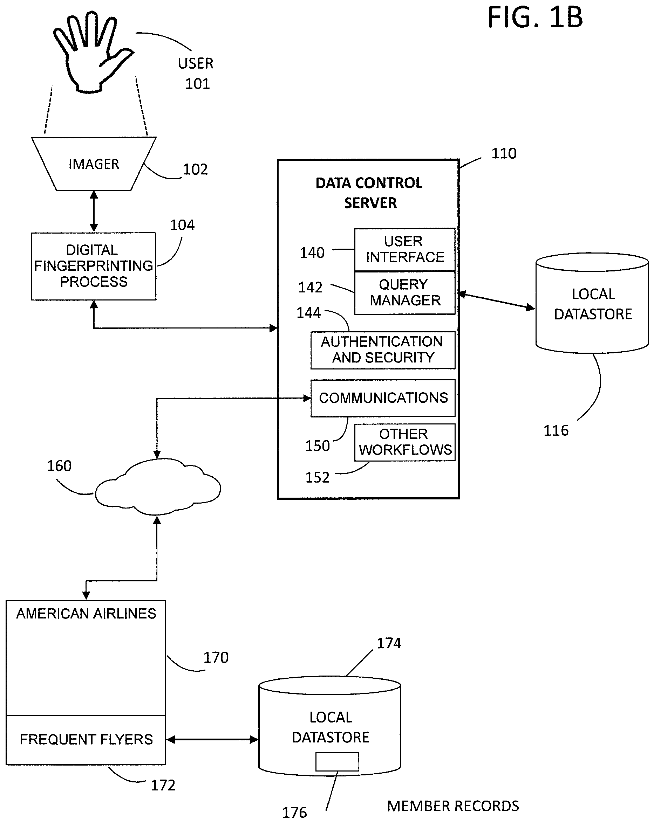

Figure 1A is a simplified block diagram of one example of a system consistent with the present disclosure. A physical key object or "proxy" 100 may be presented to a scanner 102 to acquire image data. Alternatively, a user 101 may present a part of her body, for example, a hand, finger, face, etc. into the field of view of a scanner or imager (see 101 in FIG. 1B). The image data is processed by a process 104 to extract digital fingerprint(s) of the object 100. Digital fingerprinting is described in more detail below. These elements may be discrete or integrated. For example, the scanner may be a camera in a smartphone, and the digital fingerprinting process may be an app on the same smartphone. Alternatively, intermediate data (for example, digital image data) may be transmitted over a network to a remote processor to generate one or more digital fingerprints from the image data. for example, a remote induction facility 162 may communicate over a network 160 with a data control server 110, or simply induct the user by storing generated digital fingerprints into a datastore 164 coupled to the induction facility. The induction facility may comprise, for example, a program or a programmed server.

The digital fingerprint of the key object or the user is securely communicated to a data control server 110 via path 112 using known communications technology. The data control server 110 is coupled to (or includes) a local datastore 116. The data store may contain various databases or tables, including, for example customer data and asset data. The data control server may implement, for example, a user interface 140, query manager 142 for interaction with the datastore 116, an authentication process or application 144. For example, an application may comprise an authentication and or security function. One use of the authentication process may be to identify and or authenticate a key physical object or a user based on its digital fingerprint. The authentication process may utilize a query manager 142 to query digital fingerprint records in the database 116. In some other embodiments, a digital fingerprint of a key object proxy or a user may be tendered directly to the data control server.

The data control server typically may also include a communications component 150. Various communications components 150 may be included to communicate for example, over a network 160 which may be local, wide area, internet, etc. The data control server may implement record keeping and various other workflows 152. Workflows may include, for example, opting in, opting out, permission updates, digital fingerprint updates, file updates, etc.

FIG. 1B is a simplified block diagram of another example of a secure digital fingerprint-based data control system arranged to control access to airline frequent flyer program data. The elements described with respect to Figure 1A will not be repeated here. This example illustrates one embodiment in which a data control server 110 is coupled over a network 160 to a commercial airline server 170. The airline server implements a frequent flyer program 172 which is coupled to a local datastore 174. The datastore may store records of frequent flyer program members, for example, record 176. As explained above, the illustrated system can be arranged so that a user (101) can use their digital fingerprint to utilize a workflow to opt out of the airline system and delete their data 176.

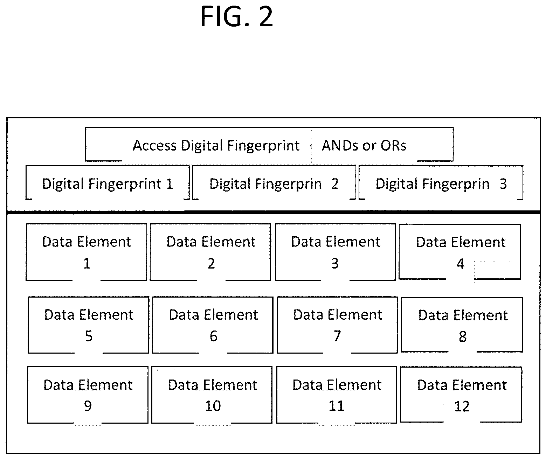

FIG. 2 is a conceptual illustration of a database in one example embodiment of the present disclosure in which digital fingerprints control access to data elements. The drawing shows one possible database associated with the teachings of this disclosure. The data elements are information held in a database (or may be programs, files, or almost any digital asset). They are accessed through the digital fingerprints shown at the top. Access may be granted through the use of any of the digital fingerprints (the "OR" situation), through the use of all of them (the "AND") situation, or any Boolean combination. Different permissions may be associated with different digital fingerprints.

FIG. 3 is a simplified flow diagram of an example process for accessing a data element secured by a digital fingerprint of a user. The process calls for acquiring image data of a user or proxy object, block 302. The image data is processed to generate a target digital fingerprint, block 304. Then a database is queried or searched to find a match if there be one, based on the target digital fingerprint, block 306. Assuming here that a match is found, within a threshold difference metric or acceptable confidence level, the matching record is read to determine a scope of access permitted for the user by this digital fingerprint, block 308.

Next the process receives a user input from the authenticated user requesting a particular action with respect to a particular file, program or other stored asset, block 310. Decision 312 determines whether the requested action is permitted by the corresponding permissions. If so, the action is executed, block 322. If not, the process returns and may generate a message, return block 320. The requested action may be, for example, an update to a data element, removing an element, or changing permissions associated with individual elements or whole records.

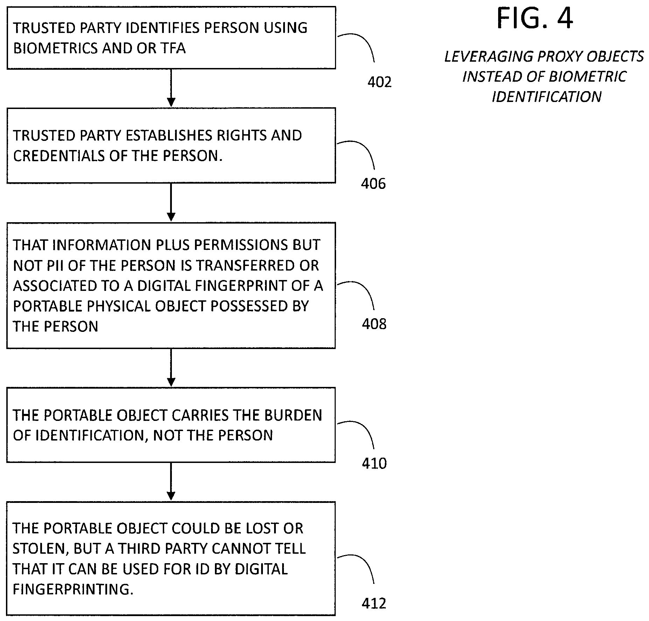

### FIG. 4 -Leveraging Proxy Objects Instead of Biometric Identification

In another embodiment, the taught system may be used to not only manage rights associated to a digital fingerprint, but also to act as an intermediary identity for individual persons, thereby avoiding identity tracking techniques. In particular, the digital fingerprints of an object may provide a substitute for biometric identification. This may be achieved by having the object, rather than the person, carry the burden of identification. This technique provides anonymity to the person, enabling access or other rights that normally would only follow biometric authentication. In this example, the person is first biometrically authenticated by a trusted third party, his rights and credentials established, and that information and permissions, but not identifying or other information unnecessary for the task at hand, is transferred or associated to the digital fingerprint of some easily transportable physical object, such as a ring, or a watch, or the backside of a drivers' license.

This embodiment is particularly addressed to situations where permissions are typically linked to an individual identity in a way that expose that identity. Such is typical of biometric access systems using fingerprints or faces. A person shows his fingerprints (or face), is identified, and then granted the permissions associated with that identity. In this embodiment, the permissions, but not the non-essential identifying information, are transferred to the object. Using rights assigned to an object rather than person avoids the use and collection of personally identifiable information (PII) in circumstances where such information is inessential or peripheral to the task at hand. Identity may be associated with an individual's physical, physiological, mental, economic, cultural or social information, but if such information is not needed for the task at hand, it is needlessly exposed in current systems. The taught system avoids that exposure, associating only the permissions and rights necessary for a certain application with the held object. In addition to protecting the privacy of the user, the taught system greatly aids in compliance with privacy and non-profiling requirements which are becoming increasingly common.

This approach is advantageous because it provides an individual with a bridge or one-to-one connection to a third-party such as a bank, commercial entity, to a digital object, or to any other system, through a specific intermediary object, as an alternative to traditional individual profiling approaches that create or record biometric data for the individual. Here the digital fingerprint of the object is used as an identity document, much like a signet ring, and like such a ring, carries only specific, enumerated rights and information, in contrast to a person's identity which is linked to a great deal of personal information unrelated to the current task.

As a clarifying example, consider a scenario between an individual and security company that controls a building. The individual wants access to the building but does not want to be identified or otherwise tracked. The security company may provide access to the building by giving access permission to the digital fingerprint of an object, for example the back of a smartphone, possessed by the individual. Each time the individual seeks to gain access to the building, they simply scan the back of their smartphone (here, a key object) to provide the digital fingerprint for authentication and gains entry to the building. This approach circumvents the need for complicated, distributed storage of the user's PII and cases where systems need to remove or forget user information, by avoiding collecting PII altogether. Here the digital fingerprint holder is anonymous. In cases, where the taught system does record PII, on an individual or object, it may provide functionality that enables users to manage what information is associated with objects and their digital fingerprints. Users can interact with software to manage this information through the rights management server.

In this example the object acts in many ways like a standard key, with two major exceptions: first, rather than being distributed by the entity controlling access, the entry rights of the key (i.e. it unlocks a door) can be digitally transferred to any object of the user's choosing and what that object is, may be kept secret from all but the user. If such a transfer is made through a third party, all identifying information is separated from entry permission. Second, unlike keys, the control object cannot be duplicated (since digital fingerprints of even visually identical objects are too different to allow false authentication).

Fig. 4 is a simplified flow diagram of a process for leveraging objects instead of biometric identification to avoid collecting personally identifiable information of a person to confirm their identity. In an embodiment, a trusted party identifies a person, for example, using biometrics, 2FA, etc., block 402. The trusted party establishes rights and credentials of the identified person, block 406. That information plus permissions, but not personally identifiable information (PII) of the person, is transferred, stored or associated to a digital fingerprint of a portable physical object possessed by the identified person, block 408. The portable object thus carries the burden of identification (through its digital fingerprint) rather than the person, block 410. As noted at block 412, the portable object may be lost or stolen, but a third party cannot tell by inspection that the object could be used for identification by digital fingerprinting.

### Do-Not-Induct list

A person can voluntarily be inducted into a list of people who do not want to be inducted in any (or any specific set of) opt-out biometric authentication systems. These systems induct *unless* you have previously stated you do not want to be inducted (so, the mirror of an opt-in system). When an associated opt-in system attempts to induct such a person, the Do Not Induct list is checked and the person not inducted. This works much like a do-not-call list.

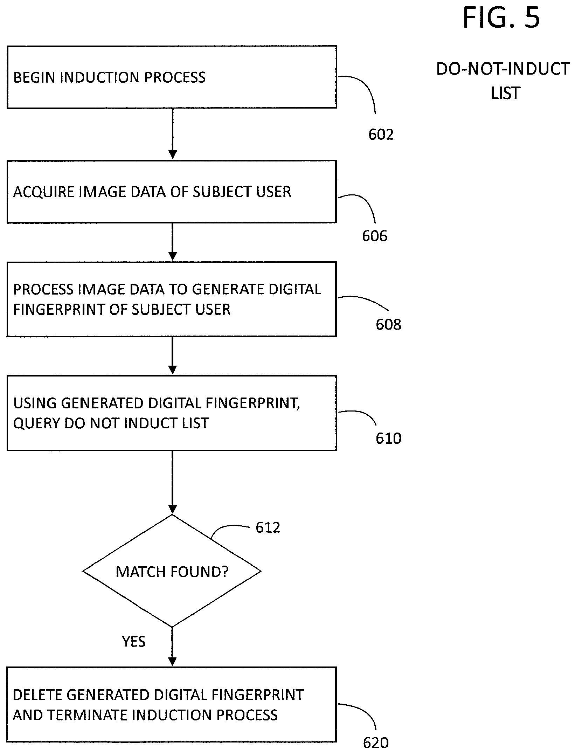

FIG. 5 is a simplified flow diagram of an example process for implementing a *do-not-induct* list associated with a digital fingerprint-based data control system. The induction process is initialized, block 602, to induct a user into a data control system. The process acquires image data of the subject user, block 606, for example, using a camera or other imager. The image data is processed to generate a digital fingerprint of the subject user, block 608. Using the generated digital fingerprint, a memory containing a do-not-induct list is queried for a match, block 610. Decision 612 determines whether a match is in the do-not-induct list. To be clear, the do-not-induct list contains a set of digital fingerprints of users who have requested to NOT be inducted into the data control system. The list need not include a name or any other recognizable personal information of the user. It is their unique digital fingerprint that is used to implement the list. If a matching digital fingerprint is found in the do-not-induct list, the process deletes the generated digital fingerprint and aborts the induction process, block 620.

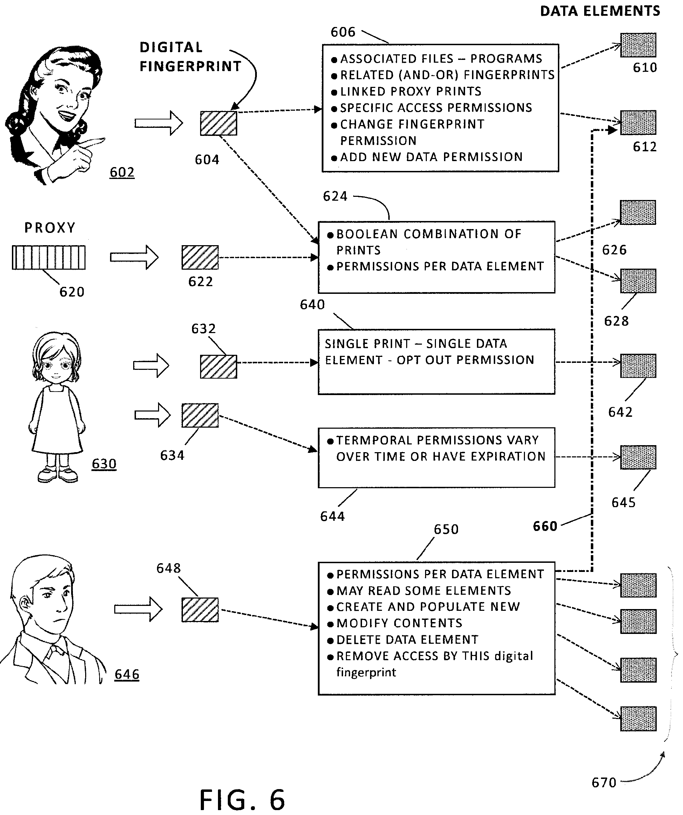

FIG. 6 is a conceptual diagram illustrating some examples of control over database contents using digital fingerprints. In one example, a user 602 has a digital fingerprint 604 collected, which may be stored in a data control system as described above. The digital fingerprint may be associated to one or more functions, files, permissions and other assets such as those listed at box 606. The dashed lines indicate the associated data elements 610, 612. That is, the digital fingerprint 604 is associated to elements 610, 612 which may be in a datastore. Here, we see that digital fingerprint 604 alone may be used to control element 610. It also is associated to elements 626 and 628 via the permissions specification at box 624.

In more detail, box 624 specifies a Boolean combination of two digital fingerprints, namely 604 and 622, and based on that combination it grants permissions per data element to affect elements 626 and 628. Digital fingerprint 622 is derived from a proxy object 620. Accordingly, for example, if user 602 had possession of the proxy object 620, then she could exercise the rights per box 624.

A young user 630 may provide two digital fingerprints 632 and 634, for example, scanned from different body parts, say face and hand. One set of permissions 640 indicates that a single digital fingerprint 632 is sufficient to control a single data element 642. The permissions box 640 includes permission to opt out storing the user's data. The digital fingerprint 634 is associated to box 644 which provides specific temporal permissions that may vary over time or have an expiration with respect to data element 645. Another user 646 is represented by digital fingerprint 648. That digital fingerprint is associated to permissions box 650 which lists a variety of permissions with respect to associated data elements indicated by brace 670. Note finally dashed line **660** indicating that digital fingerprint 648 is associated to data element 612.

### Digital Fingerprinting

"Digital fingerprinting" refers to the creation and use of digital records (digital fingerprints) derived from properties of a physical object, which digital records are typically stored in a database. Digital fingerprints maybe used to reliably and unambiguously identify or authenticate corresponding physical objects, track them through supply chains, record their provenance and changes over time, and for many other uses and applications including providing secure links between physical and digital objects as described above.

In more detail, digital fingerprints typically include information, preferably in the form of numbers or "feature vectors," that describes features that appear at particular locations, called points of interest, of a two-dimensional (2-D) or three-dimensional (3-D) object. In the case of a 2-D object, the points of interest are preferably on a surface of the corresponding object; in the 3-D case, the points of interest may be on the surface or in the interior of the object. In some applications, an object "feature template" may be used to define locations or regions of interest for a class of objects. The digital fingerprints may be derived or generated from digital data of the object which may be, for example, image data.

While the data from which digital fingerprints are derived is often images, a digital fingerprint may contain digital representations of any data derived from or associated with the object. For example, digital fingerprint data may be derived from an audio file. That audio file in turn may be associated or linked in a database to an object. Thus, in general, a digital fingerprint may be derived from a first object directly, or it may be derived from a different object (or file) linked to the first object, or a combination of the two (or more) sources. In the audio example, the audio file may be a recording of a person speaking a particular phrase. The digital fingerprint of the audio recording may be stored as part of a digital fingerprint of the person speaking. The digital fingerprint (of the person) may be used as part of a system and method to later identify or authenticate that person, based on their speaking the same phrase, in combination with other sources.

In the context of this description, a digital fingerprint is a digital representation of the physical object. It can be captured from features of the surface, the internals, the progression of the object in time, and any other repeatable way that creates a digital fingerprint that can be uniquely and securely assigned to the particular digital object. Though not mentioned herein, secure protection of the physical object, its digital fingerprint, and of the associated digital objects are assumed.

In the context of this document, a digital fingerprint is a natural "digitization" of the object, obtainable unambiguously from the digital object. It is the key to the digital object, providing the link between the physical object and the digital. These digital fingerprints, in order to accomplish the kind of physical-digital linkage desired, must have certain properties. Our approach has these properties, while many other forms of digital fingerprinting do not. Among these properties are:
- The digital fingerprint must be unambiguously derived from a single individual object.
- It must remain matchable (to a corresponding data store record) with high confidence even as the individual object ages, wears, or is otherwise changed.
- An exact match of a newly submitted digital fingerprint to the one on file is not permitted (since it might indicate hacking).
- The digital fingerprint cannot easily be modified to produce another digital fingerprint of the object.

Returning to the 2-D and 3-D object examples mentioned above, feature extraction or feature detection may be used to characterize points of interest. In an embodiment, this may be done in various ways. Two examples include Scale-Invariant Feature Transform (or SIFT) and Speeded Up Robust features (or SURF). Both are described in the literature. For example: "Feature detection and matching are used in image registration, object tracking, object retrieval etc. There are number of approaches used to detect and matching of features as SIFT (Scale Invariant Feature Transform), SURF (Speeded up Robust Feature), FAST, ORB etc. SIFT and SURF are most useful approaches to detect and matching of features because of it is invariant to scale, rotate, translation, illumination, and blur." MISTRY, Darshana et al., Comparison of Feature Detection and Matching Approaches: SIFT and SURF, GRD Journals- Global Research and Development Journal for Engineering | Volume 2 | Issue 4 | March 2017.

In some embodiments, digital fingerprint features may be matched, for example, based on finding a minimum threshold distance. Distances can be found using Euclidean distance, Manhattan distance etc. If distances of two points are less than a prescribed minimum threshold distance, those key points may be known as matching pairs. Matching a digital fingerprint may comprise assessing a number of matching pairs, their locations or distance and other characteristics. Many points may be assessed to calculate a likelihood of a match, since, generally, a perfect match will not be found. In some applications an "feature template" may be used to define locations or regions of interest for a class of objects.

In an embodiment, features may be used to represent information derived from a digital image in a machine-readable and useful way. Features may be point, line, edges, and blob of an image etc. There are areas as image registration, object tracking, and object retrieval etc. that require a system or processor to detect and match correct features. Therefore, it may be desirable to find features in ways that are invariant to rotation, scale, translation, illumination, noisy and blurry images. The search of interest points from one object image to corresponding images can be very challenging work. The search may preferably be done such that same physical interest points can be found in different views. Once located, points of interest and their respective characteristics may be aggregated to form the digital fingerprint (generally including 2-D or 3-D location parameters).

In the context of this description a digital fingerprint is a digital representation of the physical object. It can be captured from features of the surface, the internals, the progression of the object in time, and any other repeatable way that creates a digital fingerprint that can be uniquely and securely assigned to the particular digital object. Though not mentioned herein, secure protection of the physical object, its digital fingerprint, and of the associated digital objects are assumed. Put another way, a digital fingerprint is a natural "digitization" of the object, obtainable unambiguously from the digital object. It is the key to the digital object, providing the link between the physical object and the digital. These digital fingerprints, in order to accomplish the kind of physical-digital linkage desired, must have certain properties. Among these properties are:
- The digital fingerprint must be extracted unambiguously from a single individual object.
- It must remain matchable with high confidence as the individual object ages, wears, or is otherwise changed.

### Scanning

In this application, the term "scan" is used in the broadest sense, referring to any and all means for capturing an image or set of images, which may be in digital form or transformed into digital form. Images may, for example, be two dimensional, three dimensional, or in the form of a video. Thus a "scan" may refer to an image (or digital data that defines an image) captured by a scanner, a camera, a specially adapted sensor or sensor array (such as a CCD array), a microscope, a smartphone camera, a video camera, an x-ray machine, a sonar, an ultrasound machine, a microphone (or other instruments for converting sound waves into electrical energy variations), etc. Broadly, any device that can sense and capture either electromagnetic radiation or mechanical wave that has traveled through an object or reflected off an object or any other means to capture surface or internal structure of an object is a candidate to create a "scan" of an object.

Various means to extract "fingerprints" or features from an object may be used; for example, through sound, physical structure, chemical composition, or many others. The remainder of this application will use terms like "image" but when doing so, the broader uses of this technology should be implied. In other words, alternative means to extract "fingerprints" or features from an object should be considered equivalents within the scope of this disclosure. Similarly, terms such as "scanner" and "scanning equipment" herein may be used in a broad sense to refer to any equipment capable of carrying out "scans" as defined above, or to equipment that carries out "scans" as defined above as part of their function. Attestable trusted scanners should be used to provide images for digital fingerprint creation. Scanner may be a single device or a multitude of devices and scanners working to enforce policy and procedures.

### Authentication

In this application, various forms of the words "authenticate" and "authentication" are used broadly to describe both authentication and attempts to authenticate which comprise creating a digital fingerprint of the object. Therefore, "authentication" is not limited to specifically describing successful matching of inducted objects or generally describing the outcome of attempted authentications. As one example, a counterfeit object may be described as "authenticated" even if the "authentication" fails to return a matching result. In another example, in cases where unknown objects are "authenticated" without resulting in a match and the authentication attempt is entered into a database for subsequent reference the action described as "authentication" or "attempted authentication" may also, *post facto,* also be properly described as an "induction". An authentication of an object may refer to the induction or authentication of an entire object or of a portion of an object.

More information about digital fingerprinting is set forth below and can be found in various disclosures and publications assigned to Alitheon, Inc. including, for example, the following: DIGITAL FINGERPRINTING, U.S. Pat. No. 8,6109,762; OBJECT IDENTIFICATION AND INVENTORY MANAGEMENT, U.S. Pat. No. 9,152,862; DIGITAL FINGERPRINTING OBJECT AUTHENTICATION AND ANTI-COUNTERFEITING SYSTEM, U.S. Pat. No. 9,443,298; PERSONAL HISTORY IN TRACK AND TRACE SYSTEM, U.S. Pat. No. 10,037,537; PRESERVING AUTHENTICATION UNDER ITEM CHANGE, U.S. Pat. App. Pub. No. 2017-0243230 A1. Each of these patents and publications is hereby incorporated by this reference.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the disclosure and its practical applications, to thereby enable others skilled in the art to best utilize the disclosure and various embodiments with various modifications as are suited to the particular use contemplated.

The system and method disclosed herein may be implemented via one or more components, systems, servers, appliances, other subcomponents, or distributed between such elements. When implemented as a system, such systems may include an/or involve, inter alia, components such as software modules, general-purpose CPU, RAM, etc. found in general-purpose computers. In implementations where the innovations reside on a server, such a server may include or involve components such as CPU, RAM, etc., such as those found in general-purpose computers.

Additionally, the system and method herein may be achieved via implementations with disparate or entirely different software, hardware and/or firmware components, beyond that set forth above. With regard to such other components (e.g., software, processing components, etc.) and/or computer-readable media associated with or embodying the present disclosure, for example, aspects of the innovations herein may be implemented consistent with numerous general purpose or special purpose computing systems or configurations. Various exemplary computing systems, environments, and/or configurations that may be suitable for use with the innovations herein may include, but are not limited to: software or other components within or embodied on personal computers, servers or server computing devices such as routing/connectivity components, hand-held or laptop devices, multiprocessor systems, microprocessor-based systems, set top boxes, consumer electronic devices, network PCs, other existing computer platforms, distributed computing environments that include one or more of the above systems or devices, etc.

In some instances, aspects of the system and method may be achieved via or performed by logic and/or logic instructions including program modules, executed in association with such components or circuitry, for example. In general, program modules may include routines, programs, objects, components, data structures, etc. that perform particular tasks or implement particular instructions herein. The present disclosure may also be practiced in the context of distributed software, computer, or circuit settings where circuitry is connected via communication buses, circuitry or links. In distributed settings, control/instructions may occur from both local and remote computer storage media including memory storage devices.

The software, circuitry and components herein may also include and/or utilize one or more type of computer readable media. Computer readable media can be any available media that is resident on, associable with, or can be accessed by such circuits and/or computing components. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and can accessed by computing component. Communication media may comprise computer readable instructions, data structures, program modules and/or other components. Further, communication media may include wired media such as a wired network or direct-wired connection, however no media of any such type herein includes transitory media. Combinations of the any of the above are also included within the scope of computer readable media.

In the present description, the terms component, module, device, etc. may refer to any type of logical or functional software elements, circuits, blocks and/or processes that may be implemented in a variety of ways. For example, the functions of various circuits and/or blocks can be combined with one another into any other number of modules. Each module may even be implemented as a software program stored on a tangible memory (e.g., random access memory, read only memory, CD-ROM memory, hard disk drive, etc.) to be read by a central processing unit to implement the functions of the innovations herein. Or, the modules can comprise programming instructions transmitted to a general-purpose computer or to processing/graphics hardware via a transmission carrier wave. Also, the modules can be implemented as hardware logic circuitry implementing the functions encompassed by the innovations herein. Finally, the modules can be implemented using special purpose instructions (SIMD instructions), field programmable logic arrays or any mix thereof which provides the desired level performance and cost.

As disclosed herein, features consistent with the disclosure may be implemented via computer-hardware, software and/or firmware. For example, the systems and methods disclosed herein may be embodied in various forms including, for example, a data processor, such as a computer that also includes a database, digital electronic circuitry, firmware, software, or in combinations of them. Further, while some of the disclosed implementations describe specific hardware components, systems and methods consistent with the innovations herein may be implemented with any combination of hardware, software and/or firmware. Moreover, the above-noted features and other aspects and principles of the innovations herein may be implemented in various environments. Such environments and related applications may be specially constructed for performing the various routines, processes and/or operations according to the present disclosure or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the present disclosure, or it may be more convenient to construct a specialized apparatus or system to perform the required methods and techniques.

Aspects of the method and system described herein, such as the logic, may also be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Some other possibilities for implementing aspects include: memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metal-conjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, non-volatile storage media in various forms (e.g., optical, magnetic or semiconductor storage media) though again does not include transitory media. Unless the context clearly requires otherwise, throughout the description, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

Although certain presently preferred implementations of the present disclosure have been specifically described herein, it will be apparent to those skilled in the art to which the present disclosure pertains that variations and modifications of the various implementations shown and described herein may be made without departing from the spirit and scope of the present disclosure. Accordingly, it is intended that the present disclosure be limited only to the extent required by the applicable rules of law.

### Enumerated Example Embodiments

Certain aspects of some embodiments of the present disclosure will now be defined, without limitation, in the following Enumerated Example Embodiments (EEEs):
EEE 1: A data control method comprising: inducting a first user into a data control system ("DCS"), wherein inducting the user includes acquiring a first biologically based digital fingerprint of the user and storing the first digital fingerprint in a database coupled to the DCS; storing a data element in the database and linking the data element to the first digital fingerprint in the database; receiving a target digital fingerprint presented to the DCS; querying the database to identify a matching digital fingerprint based on the target digital fingerprint; in a case that a match is found by the querying step, determining whether presentation of the target digital fingerprint alone is sufficient to grant access to the database; in a case that presentation of the target digital fingerprint alone is sufficient to grant access to the database, determining a scope of access rights granted by the presentation of the target digital fingerprint; receiving a command input to the DCS; comparing the command to the scope of access rights; and executing the command only if the executing the command is within the scope of access rights.
EEE 2: The method of EEE 1 wherein the digital fingerprint includes fingerprint features extracted from selected authentication regions in an image of a portion of the first user's body, the fingerprint features stored as feature vectors in the digital fingerprint.
EEE 3: The method of EEE 1 or EEE 2 wherein the scope of access rights includes rights to remove or alter content of the data element.
EEE 4: The method of any of EEEs 1-3 wherein the scope of access rights includes rights to remove the first digital fingerprint from the system so that is cannot be used again.
EEE 5: The method of any of EEEs 1-4 wherein the scope of access rights includes at least one of: rights to add or delete digital fingerprints linked to the data element; rights to change access permissions relative to the data element; and rights to execute a program.
EEE 6: The method of any of EEEs 1-5 including, in a case of the command input to the DCS requesting removal of a data element, transmitting a message to a user interface associated with the target digital fingerprint, the message reporting success or failure to remove the data element.
EEE 7: The method of EEE 5 or EEE 6 including, in a case where the requested removal fails due to more than one person having access through their respective digital fingerprints to the data element requested to be removed, removing the digital fingerprint that matched the target digital fingerprint from the database without removing the data element.
EEE 8: The method of any of EEEs 1-7 wherein the induction of the first user into the system is voluntary.
EEE 9: The method of any of EEEs 1-7 wherein the induction of the first user into the system is involuntary.
EEE 10: The method of any of EEEs 1-9 and further comprising: providing an induction system; provisioning the DCS for communication over a network with the induction system; generating the first biologically based digital fingerprint of the first user in the induction system; and transmitting the first biologically based digital fingerprint from the induction system to the DCS for storage in the database on behalf of the first user.
EEE 11: The method of EEE 10 wherein the digital fingerprint does not include any personal information of the first user other than digital fingerprint data comprising fingerprint features extracted from selected authentication regions in an image of a portion of the first user's body, the fingerprint features stored as feature vectors in the digital fingerprint.
EEE 12: The method of any of EEEs 1-11 and further comprising: providing a digital fingerprint imaging system; provisioning the DCS for communication over a network with the digital fingerprint imaging system; acquiring image data of a user in the digital fingerprint imaging system; transmitting the image data from the imaging system to the DCS; and in the DCS, generating the target digital fingerprint based on the image data.
EEE 13: The method of any of EEEs 1-11 and further comprising: providing a digital fingerprint imaging system; provisioning the DCS for communication over a network with the digital fingerprint imaging system; acquiring image data of a user in the digital fingerprint imaging system; in the imaging system, generating the target digital fingerprint based on the image data; and transmitting the target digital fingerprint from the imaging system to the DCS for use in accessing the DCS system.
EEE 14: The method of EEE 13 wherein the target digital fingerprint does not include any personal information of any user other than digital fingerprint data comprising fingerprint features extracted from selected authentication regions in an image of a portion of a user's body, the fingerprint features stored as feature vectors in the digital fingerprint.
EEE 15: The method of any of EEEs 1-14 wherein, determining whether presentation of the target digital fingerprint alone is sufficient to grant access to the database comprises inspecting the matching digital fingerprint.
EEE 16: The method of any of EEEs 1-15 wherein determining the scope of access rights comprises inspecting the matching digital fingerprint or a rights record linked to the matching digital fingerprint.
EEE 17: A data control method comprising: inducting a user into a system, the induction including acquiring a first biologically based digital fingerprint of the user and storing the digital fingerprint in a database coupled to the system; receiving a target digital fingerprint; querying the database to identify a matching digital fingerprint based on the target digital fingerprint; in a case that a match is found by the querying step, presenting to a user interface an option to opt out of the system; responsive to receiving acceptance of the option to opt out of the system, removing the stored digital fingerprint from the database, and removing all data elements in the database that pertain solely to the user, thereby ending the user's participation in the system.
EEE 18: A method comprising: acquiring image data of a person; processing the image data to extract a digital fingerprint wherein the digital fingerprint includes fingerprint features extracted from selected authentication regions in the image data; querying a DNI database for a match based on the digital fingerprint; in a case that a match is found in the DNI database, rejecting the digital fingerprint from induction into a system, and deleting all copies of the digital fingerprint.
EEE 19: The method of EEE 18 and further comprising transmitting a message indicating that induction of the person is declined.
EEE 20: A data control method comprising: inducting a first user into a loyalty or membership program managed by a program server, acquiring a first biologically based digital fingerprint of the first user and storing the first digital fingerprint in a database, wherein the database is coupled to a data control server that is independent of the loyalty program server; in the data control server, maintaining a lookup table linking each stored digital fingerprint to a serial number that is unique within the database; transmitting to the program server a serial number linked to the first user digital fingerprint in connection with an identifier of the first user; receiving a target digital fingerprint presented to the data control server; in the data control server, querying the database to identify a matching digital fingerprint based on the target digital fingerprint; in a case that a match is found by the querying step, determining from the lookup table a serial number linked to the matching digital fingerprint; in a case that a match is found by the querying step, presenting to a user interface an option to opt out of the loyalty or membership program; responsive to receiving acceptance of the option to opt out of the loyalty or membership program, transmitting a message to the program server on behalf of the user, the message including the determined serial number and a command to remove the user from the loyalty or membership program.
EEE 21: The method of EEE 20 including: sending a command to the program server to remove all data elements in its systems that pertain solely to the user that corresponds to the serial number, thereby ending the user's participation in the program.
EEE 22: The method of EEE 20 or EEE 21 including: in the program server, acquiring the first biologically based digital fingerprint of the first user; transmitting the first biologically based digital fingerprint of the first user to the data control server for storage; in the program server, receiving from the data control server a serial number corresponding to the first biologically based digital fingerprint of the first user; and then deleting all copies of the first biologically based digital fingerprint of the first user from the program server.
EEE 23: The method of any of EEEs 20-22 including: acquiring image data of a user in the program server system; transmitting the image data to the DCS; and in the DCS, processing the image data to form the first digital fingerprint.

While the foregoing has been with reference to a particular embodiment of the disclosure, it will be appreciated by those skilled in the art that changes in this embodiment may be made without departing from the principles and spirit of the disclosure, the scope of which is defined by the appended claims.

## Claims

1. A data control method comprising:
inducting a first user into a data control system ("DCS"), wherein inducting the user includes acquiring a first biologically based digital fingerprint of the user and storing the first digital fingerprint in a database coupled to the DCS;
storing a data element in the database and linking the data element to the first digital fingerprint in the database;
receiving a target digital fingerprint presented to the DCS;
querying the database to identify a matching digital fingerprint based on the target digital fingerprint;
in a case that a match is found by the querying step, determining whether presentation of the target digital fingerprint alone is sufficient to grant access to the database;
in a case that presentation of the target digital fingerprint alone is sufficient to grant access to the database, determining a scope of access rights granted by the presentation of the target digital fingerprint;
receiving a command input to the DCS;
comparing the command to the scope of access rights; and
executing the command only if the executing the command is within the scope of access rights.

2. The method of claim 1 wherein the digital fingerprint includes fingerprint features extracted from selected authentication regions in an image of a portion of the first user's body, the fingerprint features stored as feature vectors in the digital fingerprint.

3. The method of claim 1 or claim 2 wherein:
the scope of access rights includes rights to remove or alter content of the data element; and/or
the induction of the first user into the system is voluntary.

4. The method of claim 1 or claim 2 wherein:
the scope of access rights includes rights to remove the first digital fingerprint from the system so that is cannot be used again; and/or
the induction of the first user into the system is involuntary.

5. The method of any of claims 1-4 wherein the scope of access rights includes at least one of:
rights to add or delete digital fingerprints linked to the data element;
rights to change access permissions relative to the data element; and
rights to execute a program.

6. The method of any of claims 1-5 including, in a case of the command input to the DCS requesting removal of a data element, transmitting a message to a user interface associated with the target digital fingerprint, the message reporting success or failure to remove the data element; and
in some embodiments further including, in a case where the requested removal fails due to more than one person having access through their respective digital fingerprints to the data element requested to be removed, removing the digital fingerprint that matched the target digital fingerprint from the database without removing the data element.

7. The method of any of claims 1-6 and further comprising:
providing an induction system;
provisioning the DCS for communication over a network with the induction system;
generating the first biologically based digital fingerprint of the first user in the induction system; and
transmitting the first biologically based digital fingerprint from the induction system to the DCS for storage in the database on behalf of the first user; and
wherein, in some embodiments, the digital fingerprint does not include any personal information of the first user other than digital fingerprint data comprising fingerprint features extracted from selected authentication regions in an image of a portion of the first user's body, the fingerprint features stored as feature vectors in the digital fingerprint.

8. The method of any of claims 1-7 and further comprising:
providing a digital fingerprint imaging system;
provisioning the DCS for communication over a network with the digital fingerprint imaging system;
acquiring image data of a user in the digital fingerprint imaging system;
transmitting the image data from the imaging system to the DCS; and
in the DCS, generating the target digital fingerprint based on the image data.

9. The method of any of claims 1-7 and further comprising:
providing a digital fingerprint imaging system;
provisioning the DCS for communication over a network with the digital fingerprint imaging system;
acquiring image data of a user in the digital fingerprint imaging system;
in the imaging system, generating the target digital fingerprint based on the image data; and
transmitting the target digital fingerprint from the imaging system to the DCS for use in accessing the DCS system; and
wherein, in some embodiments, the target digital fingerprint does not include any personal information of any user other than digital fingerprint data comprising fingerprint features extracted from selected authentication regions in an image of a portion of a user's body, the fingerprint features stored as feature vectors in the digital fingerprint.

10. The method of any of claims 1-9 wherein:
determining whether presentation of the target digital fingerprint alone is sufficient to grant access to the database comprises inspecting the matching digital fingerprint; and/or
determining the scope of access rights comprises inspecting the matching digital fingerprint or a rights record linked to the matching digital fingerprint.

11. A use of one or more digital fingerprints, the use comprising:
inducting a user into a system, the induction including acquiring a first biologically based digital fingerprint of the user and storing the digital fingerprint in a database coupled to the system;
receiving a target digital fingerprint;
querying the database to identify a matching digital fingerprint based on the target digital fingerprint;
in a case that a match is found by the querying step, presenting to a user interface an option to opt out of the system;
responsive to receiving acceptance of the option to opt out of the system, removing the stored digital fingerprint from the database; and
removing all data elements in the database that pertain solely to the user, thereby ending the user's participation in the system.

12. A use of one or more digital fingerprints, the use comprising:
acquiring image data of a person;
processing the image data to extract a digital fingerprint wherein the digital fingerprint includes fingerprint features extracted from selected authentication regions in the image data;
querying a DNI database for a match based on the digital fingerprint; and
in a case that a match is found in the DNI database, rejecting the digital fingerprint from induction into a system, and deleting all copies of the digital fingerprint; and
in some embodiments further comprising transmitting a message indicating that induction of the person is declined.

13. A use of one or more digital fingerprints, the use comprising:
inducting a first user into a loyalty or membership program managed by a program server,
acquiring a first biologically based digital fingerprint of the first user and storing the first digital fingerprint in a database, wherein the database is coupled to a data control server that is independent of the loyalty program server;
in the data control server, maintaining a lookup table linking each stored digital fingerprint to a serial number that is unique within the database;
transmitting to the program server a serial number linked to the first user digital fingerprint in connection with an identifier of the first user;
receiving a target digital fingerprint presented to the data control server;
in the data control server, querying the database to identify a matching digital fingerprint based on the target digital fingerprint;
in a case that a match is found by the querying step, determining from the lookup table a serial number linked to the matching digital fingerprint;
in a case that a match is found by the querying step, presenting to a user interface an option to opt out of the loyalty or membership program;
responsive to receiving acceptance of the option to opt out of the loyalty or membership program, transmitting a message to the program server on behalf of the user, the message including the determined serial number and a command to remove the user from the loyalty or membership program.

14. The use of claim 13 including:
sending a command to the program server to remove all data elements in its systems that pertain solely to the user that corresponds to the serial number, thereby ending the user's participation in the program; and/or
acquiring image data of a user in the program server system, transmitting the image data to the DCS, and in the DCS, processing the image data to form the first digital fingerprint.

15. The use of claim 13 or claim 14 including:
in the program server, acquiring the first biologically based digital fingerprint of the first user;
transmitting the first biologically based digital fingerprint of the first user to the data control server for storage;
in the program server, receiving from the data control server a serial number corresponding to the first biologically based digital fingerprint of the first user; and then
deleting all copies of the first biologically based digital fingerprint of the first user from the program server.
